# EUROPÄISCHE PATENTSCHRIFT

(11) **EP 2 221 596 B1**
(45) Veröffentlichungstag und Bekanntmachung des Hinweises auf die Patenterteilung: **13.03.2013**
(21) Anmeldenummer: 09002249.2
(22) Anmeldetag: 18.02.2009
(51) Int. Cl.: G01M 1/36

(54) **Vorrichtung zum Auswuchten rotierender Körper**
Device for balancing rotating bodies
Dispositif d'équilibrage de corps tournants

(43) Veröffentlichungstag der Anmeldung: 25.08.2010
(73) Patentinhaber: MPM Micro Präzision Marx GmbH, 91056 Erlangen (DE)
(72) Erfinder: Marx, Dieter, 91056 Erlangen (DE); Marx, Manfred, 91056 Erlangen (DE)
(74) Vertreter: Salleck, Michael

(56) Entgegenhaltungen:
- EP-A- 0 640 192
- DE-A1- 19 716 768
- DE-A1-102005 063 216
- DE-U1- 9 321 004
- DE-U1-202004 012 356

## Beschreibung

Die Erfindung bezieht sich auf eine Vorrichtung zum Auswuchten rotierender Körper nach dem Oberbegriff des Anspruchs 1.

Vorrichtungen zum Auswuchten rotierender Körper sind in einer Vielzahl verschiedener Ausführungsformen aus dem Stand der Technik bekannt.

Beispielsweise offenbart die DE 197 16 768 A1 eine Vorrichtung zum Auswuchten von rotierenden Körpern, bestehend aus einer mit dem Körper umlaufenden, konzentrisch zu seiner Rotationsachse angeordneten kreisringförmigen Laufbahn, innerhalb der mindestens zwei Gewichte oberhalb der kritischen Drehzahl des Körpers oder seines Lagersystems frei beweglich angeordnet sind, wobei allen Gewichten Fixiereinrichtungen zugeordnet sind, und wobei die Fixiereinrichtung aus am Innenrand der Laufbahn und an den dort anliegenden Flächen der Gewichte angeordneten Rasteinrichtungen besteht, und dass die Federkonstanten der Lagerungen und die Masse der Gewichte derart dimensioniert sind, dass bei einer vorbestimmten ersten Rotationsgeschwindigkeit die von den Gewichten aufgrund ihrer Zentrifugalkraft in radialer Richtung zurückgelegten Wegstrecken zu deren Freigabe aus den Rasteinrichtungen ausreicht.

In der EP 0640 192 B1 wird vorgeschlagen, in der Laufbahn einen Mitnehmer in Form einer Feder-Masse-Anordnung zu installieren, der bei zunehmender Rotationsgeschwindigkeit durch die auf ihn ausgeübte Zentrifugalkraft in einer Nut in der Laufbahn verschwinden soll.

Die DE 20 2004 012 356 U1 beschreibt eine Auswuchtvorrichtung mit einem Halteflansch mit einer Ringnut und mittels einer Verstelleinrichtung innerhalb der Ringnut verschiebbaren Gewichten sowie einer Steuereinrichtung zur Positionsermittlung und Verstellung der Gewichte.

Nachteilig an den aus dem Stand der Technik bekannten Vorrichtungen ist jedoch, dass es sich zumeist um mechanisch sehr aufwändig ausgebildete Systeme handelt, denen ein erhöhter Wartungsaufwand zugrunde liegt.

Ausgehend von diesem Stand der Technik besteht die Aufgabe der vorliegenden Erfindung darin, eine Vorrichtung zum Auswuchten rotierender Körper bereitzustellen, welche eine einfache mechanische Ausgestaltung aufweist und darüber hinaus einen nahezu wartungsfreien Betrieb ermöglicht.

Diese Aufgabe wird durch eine Vorrichtung mit den Merkmalen des Anspruchs 1 gelöst.

Vorteilhafte Ausführungsformen der Erfindung sind in weiteren Ansprüchen definiert.

Die erfindungsgemäße Vorrichtung ist dadurch gekennzeichnet, dass das zumindest eine Wuchtsegment mit zunehmender Drehzahl des Trägerelements mit einer zunehmenden Fliehkraft beaufschlagt wird, wobei die Aufnahmenut und das Wuchtsegment miteinander in Wirkverbindung stehende Keilflächen aufweisen, die derart ausgebildet sind, dass bei zunehmender Fliehkraft die an den Keilflächen erzeugte Keilwirkung zu einer radialen Selbsthemmung des Wuchtsegments in der Aufnahmenut führt.

Eine bevorzugte Ausführungsform sieht vor, dass zwei bewegliche Wuchtsegmente (siehe Figurenbeschreibung) vorgesehen sind, um eine vorhandene Unwucht in Lage und Größe ausgleichen zu können.

Die mit der Erfindung erreichbaren Vorteile resultieren daraus, dass der Vorrichtung ein mechanisch äußerst einfacher Aufbau zugrunde liegt, bedingt durch eine möglichst geringe Anzahl an Bauteilen und bedingt durch ein sehr einfach wirkendes technisches Funktionsprinzip. Die Selbsthemmung des Wuchtsegments in der Aufnahmenut wird durch die miteinander in Wirkverbindung stehenden und im Wesentlichen radial verlaufenden Keilflächen erzielt, mit denen sowohl die Aufnahmenut als auch das zumindest eine Wuchtsegment versehen sind. Die Keilflächen der Aufnahmenut und des zumindest einen Wuchtsegments sind form- und/oder funktionskomplementär zueinander ausgebildet. Eine Selbsthemmung des Wuchtsegments in der Aufnahmenut wird somit durch die bei Beschleunigung erzielbare Fliehkraft erreicht. Auf aufwändige zusätzliche Mittel zur Positionsfixierung des Wuchtsegments wie umlaufende Verzahnungen oder Raster und dergleichen kann somit verzichtet werden.

Bevorzugt, jedoch keinesfalls zwingend, kann vorgesehen sein, dass das ringförmige Trägerelement aus zwei separaten ringförmigen Trägerscheiben gebildet wird, wobei die Trägerscheiben über Befestigungsmittel, insbesondere Schrauben und/oder Stifte, lösbar miteinander verbunden sind. In jede der Trägerscheiben kann ein Teilbereich der Kontur der Aufnahmenut eingearbeitet sein. Durch Zusammenfügen der beiden Trägerscheiben entsteht somit die vollständig ausgebildete Aufnahmenut. Die Materialwahl zur Herstellung der Vorrichtung bzw. das Herstellungsverfahren selbst kann variieren und beispielsweise von der Größe bzw. den äußeren Gegebenheiten der zu schaffenden Vorrichtung abhängen.

Es ist vorgesehene, dass die Aufnahmenut radial umlaufend auf der Umfangsfläche des ringförmigen Trägerelements angeordnet ist. Alternativ wäre denkbar, die Aufnahmenut axial umlaufend auf zumindest einer Stirnfläche (axiale Seitenfläche) des ringförmigen Trägerelements anzuordnen.

Bevorzugt, jedoch keinesfalls zwingend, ist die Aufnahmenut im Wesentlichen T-förmig ausgebildet, dergestalt, dass die Aufnahmenut einen radial innenliegenden ersten Aufnahmekanal und einen sich an den ersten Aufnahmekanal anschließenden und dazu zumindest geringfügig kleiner ausgebildeten radial außenliegenden zweiten Aufnahmekanal aufweist, wobei an den Flanken des kleineren zweiten Aufnahmekanals die sich radial nach außen verjüngenden Keilflächen verlaufen.

Das Wuchtsegment ist im Wesentlichen formkomplementär zur Aufnahmenut ausgebildet, wobei das Wuchtsegment einen zur Aufnahmenut geringfügig kleineren Querschnitt (beispielsweise ebenfalls T-förmig) aufweist, und wobei die am Wuchtsegment vorgesehenen Keilflächen, mit den am zweiten Aufnahmekanal der Aufnahmenut vorgesehenen Keilflächen in Wirkverbindung stehen.

Das Wuchtsegment kann radial stufenlos innerhalb von 360° in der Aufnahmenut verstellt werden und so grundsätzlich jede Radialposition innerhalb der Aufnahmenut einnehmen.

Das Wuchtsegment ist so ausgebildet, dass bisherige Klemm-Methoden zur Fixierung von Ausgleichsmassen entfallen können, da das Wuchtsegment über die mit den Keilflächen erzeugte Keilwirkung fixiert wird. Dabei steigt mit zunehmender Fliehkraft die Selbsthemmung des Wuchtsegments in der Aufnahmenut. In Ruhestellung des Trägerelements kann das Wuchtsegment dennoch ohne Werkzeuge oder dergleichen stufenlos verstellt, ausgerichtet und anschließend durch die erzeugte Fliehkraft fixiert werden. Das Wuchtsegment bzw. die Aufnahmenut können so aufeinander abgestimmt sein, dass das Wuchtsegment in seiner Ruhestellung eine voreingestellte Position selbständig hält, aber bei Bedarf unter leichter Krafteinwirkung innerhalb der Aufnahmenut verschoben werden kann.

Es kann jedoch auch vorgesehen sein, am Wuchtsegment ein flexibles Mittel zum Erzeugen eines Gegendrucks, insbesondere eine Feder oder dergleichen, anzuordnen, wobei das Mittel das Wuchtsegment in Ruhestellung in der Aufnahmenut fixiert. Durch leichten Druck und ein damit verbundenes Stauchen des flexiblen Mittels, wird das Wuchtsegment "freigegeben" und kann unter leichtem Druck in Richtung der horizontalen Drehachse des Trägerelements radial um diese verstellt werden. Beispielsweise kann das flexible Mittel auch in der Art eines flexiblen Belages ausgestaltet sein.

Beispielsweise sind am Wuchtsegment Laufkörper, beispielsweise in der Art einer Kugel oder eines Lagers, vorgesehen, wobei mittels der Laufkörper eine Verstellung des Wuchtsegments in der Aufnahmenut erfolgen kann. Das flexible Mittel und/oder der Laufkörper können in einem Einsatz, beispielsweise einer Buchse oder Hülse oder dergleichen, angeordnet sein, wobei der Einsatz wiederum in einer entsprechenden Ausnehmung im Wuchtsegment angeordnet ist. Der Einsatz einer Kugel und/oder eines gefederten Druckstücks/Federelement ist insofern vorteilhaft, als dass es sich bei beiden Bauteilen um kostengünstige Normteile handelt. Die Kugel kann beispielsweise auch primär als Begrenzung/Lagerstelle für das Federelement dienen und somit also nicht primär/zwingend als Laufkörper.

Die Verstellung des Wuchtsegments innerhalb der Aufnahmenut und/oder der grundsätzliche Auswuchtungsprozess der Vorrichtung, kann automatisch, beispielsweise mittels eines entsprechenden stationären Mittels, oder manuell, per Hand, erfolgen.

Bei mehreren Wuchtsegmenten, bevorzugt zwei Wuchtsegmenten, findet die Verstellbewegung der einzelnen Wuchtsegmente in der gleichen Ebene statt bzw. sind die einzelnen Wuchtsegmente radial hintereinander in einer gemeinsamen Aufnahmenut angeordnet.

Um bei einer manuellen Verstellung der Wuchtsegmente, die genaue Position des zumindest einen Wuchtsegments bestimmen bzw. entsprechend ausrichten zu können, kann am Trägerelement im Bereich der Aufnahmenut ein(e) optisch oder elektronisch ablesbare(r) Ablese-Skala oder Maßstab vorhanden sein, mithilfe derer die Ist- und/oder Söllposition des Wuchtsegments innerhalb der Aufnahmenut bestimmt werden kann. Dazu kann vorgesehen sein, dass das Wuchtsegment mit einer für die Ablese-Skala oder Maßstab geeigneten Ablese-Markierung versehen ist, wobei die Ablese-Markierung mit der am Trägerelement angeordneten Ablese-Skala oder Maßstab zusammenwirkt. Beispielsweise kann die Ablese-Markierung in der Art einer Einkerbung oder dergleichen ausgebildet sein. Das Wuchtsegment kann ferner mit einer Ausnehmung oder dergleichen versehen sein, in die ein Hilfs- oder Verstellmittel, beispielsweise ein Stift oder dergleichen, eingeführt werden kann, um eine komfortablere manuelle oder automatische Verstellung zu gewährleisten.

Die Vorrichtung kann grundsätzlich weitestgehend drehzahlunabhängig betrieben werden.

Ein Ausführungsbeispiel der Erfindung wird in den Zeichnungen dargestellt und im Nachfolgenden näher beschrieben.

Es zeigen:
- **Fig. 1**: eine Vorrichtung zum Auswuchten rotierender Körper in einer perspektivischen Darstellung;
- **Fig. 2**: die Vorrichtung gem. Fig. 1 in einer Explosionsdarstellung;
- **Fig. 3**: die Vorrichtung gem. Fig. 1 in einer Seitenansicht;
- **Fig. 4**: die Schnittansicht A-A gem. Fig. 3;
- **Fig. 5**: eine weitere Seitenansicht mit teilgeschnittenem Detailbereich C;
- **Fig. 6**: der Detailbereich C gem. Fig. 5 in einer vergrößerten Ansicht.

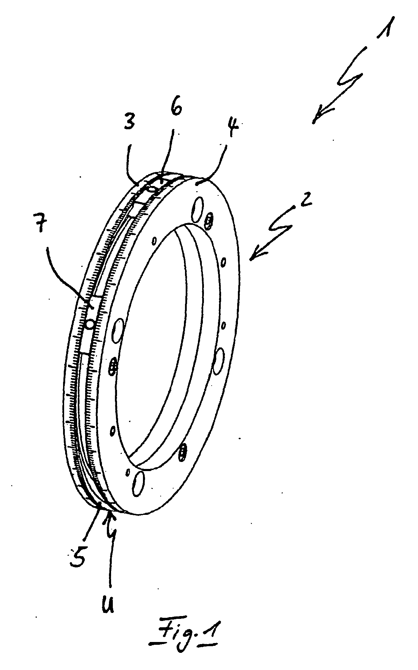

**Fig. 1** zeigt eine Vorrichtung 1 zum Auswuchten rotierender Körper in einer perspektivischen Darstellung. Die Vorrichtung 1 umfasst ein ringförmiges Trägerelement 2, welches wiederum aus zwei einzelnen lösbar miteinander verbundenen Trägerscheiben 3 und 4 besteht. Die Trägerscheiben 3 und 4 bilden im montierten Zustand eine auf der Umfangsfläche U des Trägerelements 2 radial umlaufende Aufnahmenut 5.

In der Aufnahmenut 5 sind zwei um 360° stufenlos verstellbare Wuchtsegmente 6, 7 angeordnet. Die Wuchtsegmente 6, 7 können unter leichter Krafteinwirkung, beispielsweise von Hand oder automatisch, in der Aufnahmenut 5 verschoben werden.

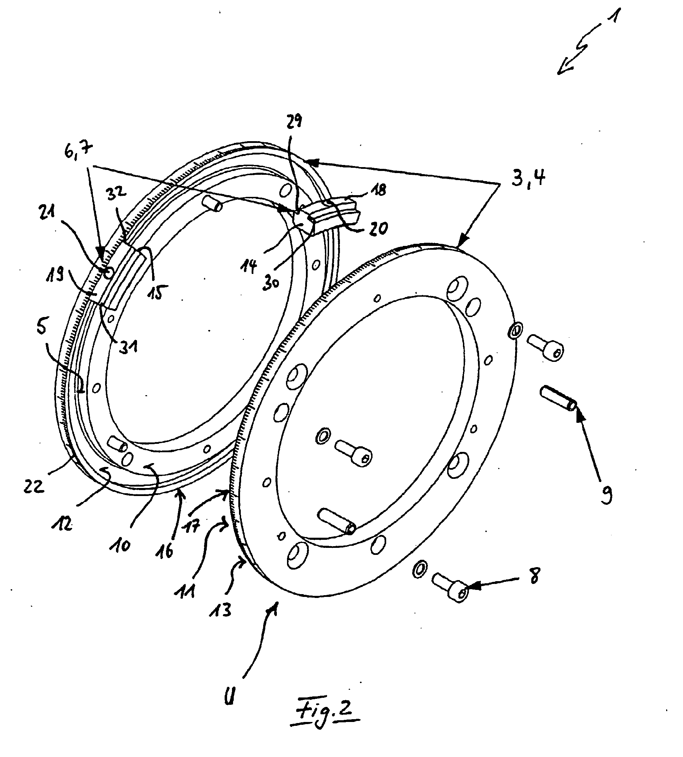

**Fig. 2** zeigt die Vorrichtung 1 gem. Fig. 1 in einer Explosionsdarstellung. Gut zu erkennen sind die Trägerscheiben 3, 4, die Wuchtsegmente 6, 7 sowie die Befestigungsmittel, in der Art einer Schraube 8 und eines Stiftes 9, zur lösbaren Verbindung der Trägerscheiben 3 und 4 miteinander.

Die Trägerscheiben 3 und 4 weisen jeweils auf ihren gegenüberliegenden Innenseiten 10, 11 einen Teilabschnitt 12, 13 der Aufnahmenut 5 auf. Die Teilabschnitte 10, 11 wurden beispielsweise mittels eines spanabhebenden Verfahrens in die Trägerscheiben 3, 4 eingearbeitet. Durch Zusammenfügen der einzelnen Trägerscheiben 3 und 4 entsteht somit letztendlich die im Wesentlichen T-Förmige Kontur der Aufnahmenut 5.

Die Wuchtsegmente 6 und 7 weisen eine im Vergleich zur Aufnahmenut 5 formkomplementäre, also im Wesentlichen ebenfalls T-Förmige, Ausgestaltung auf mit einem, aufgrund der zu gewährleistenden Verstellbewegung, zumindest geringfügig kleineren Querschnitt. Die Wuchtsegmente 6 und 7 sind so konzipiert, dass der breitere Bodenabschnitt 14, 15 in der breiteren Bodenbasis 16, 17 (gleich Teilabschnitt 10, 11) der Aufnahmenut 5 zur Anlage kommt. Der im Vergleich zum Bodenabschnitt 14, 15 kleiner ausgebildete obere Steg 18, 19 der Wuchtsegmente 6, 7 verläuft im Wesentlichen bündig zur Umfangsfläche U des Trägerelements. Die Wuchtsegmente 6, 7 sind leicht radial ausgebildet und weisen den im Wesentlichen gleichen Radius auf wie die Aufnahmenut 5.

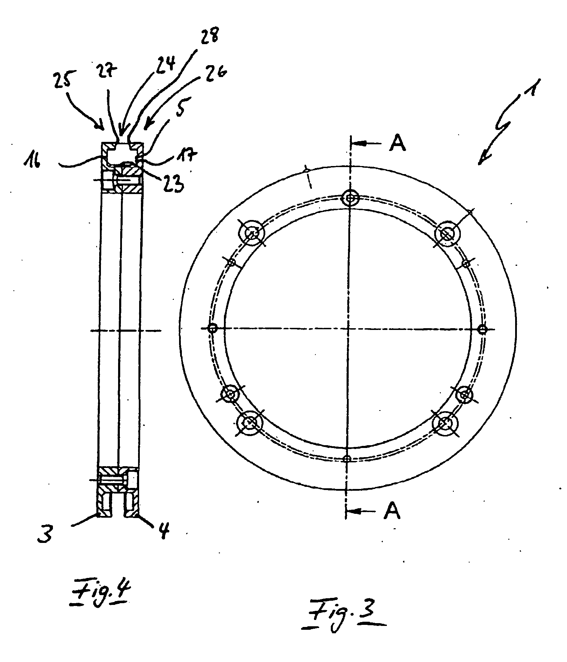

Die Wuchtsegmente 6, 7 weisen an ihrem oberen Steg 18, 19 nach oben hin verjüngend verlaufende Keilflächen 29, 30, 31, 32 auf, die mit den am zweiten Aufnahmekanal (gezeigt in Fig. 4) der Aufnahmenut 5 vorgesehenen nach oben hin verjüngend verlaufenden Keilflächen (gezeigt in Fig. 4) in Wirkverbindung stehen und sich im Belastungszustand (Fliehkraft) gegen diese abstützen und somit zu einer Selbsthemmung der Wuchtsegmente 6, 7 in der Aufnahmenut 5 führen.

Die Wuchtsegmente 6, 7 verlaufen dabei auf (in) einer gemeinsamen Ebene.

Die Wuchtsegmente 6, 7 sind ferner mit Ausnehmungen 20, 21 versehen, in die ein Hilfsmittel eingeführt werden kann, um eine komfortablere manuelle oder automatische Verstellung der Wuchtsegmente in der Aufnahmenut 5 zu gewährleisten.

Um die Positionen der einzelnen Wuchtsegmente 6, 7 innerhalb der Aufnahmenut 5 bestimmen zu können, ist auf der Umfangsfläche U des Trägerelements zur Verdeutlichung eine optisch ablesbare Ablese-Skala 22 vorgesehen.

**Fig. 3** zeigt die Vorrichtung 1 gem. Fig. 1 in einer Seitenansicht und einer angedeuteten Schnittlinie A-A.

**Fig. 4** zeigt die Schnittansicht A-A gem. Fig. 3. Gut zu erkennen ist die im Wesentlichen T-Förmige Aufnahmenut 5, die durch Zusammenfügen der einzelnen Trägerscheiben 3 und 4 gebildet wird. Die Aufnahmenut 5 weist einen radial innenliegenden ersten Aufnahmekanal 23 auf, welcher durch die Bodenbasis 16, 17, gebildet wird und einen sich an den ersten Aufnahmekanal 23 anschließenden und dazu zumindest geringfügig kleiner ausgebildeten radial außenliegenden zweiten Aufnahmekanal 24, wobei an den Flanken 25, 26 des kleineren zweiten Aufnahmekanals 24 die sich radial nach außen verjüngenden Keilflächen 27, 28 verlaufen.

Diese Keilflächen 27, 28 stehen in Wirkverbindung mit den am Wuchtsegment 6, 7 vorgesehenen Keilflächen 29, 30, 31, 32 und bewirken, dass bei zunehmender Fliehkraft die an den Keilflächen 27, 28, 29, 30, 31, 32 erzeugte Keilwirkung zu einer radialen Selbsthemmung der Wuchtsegmente 6, 7 in der Aufnahmenut 5 führt.

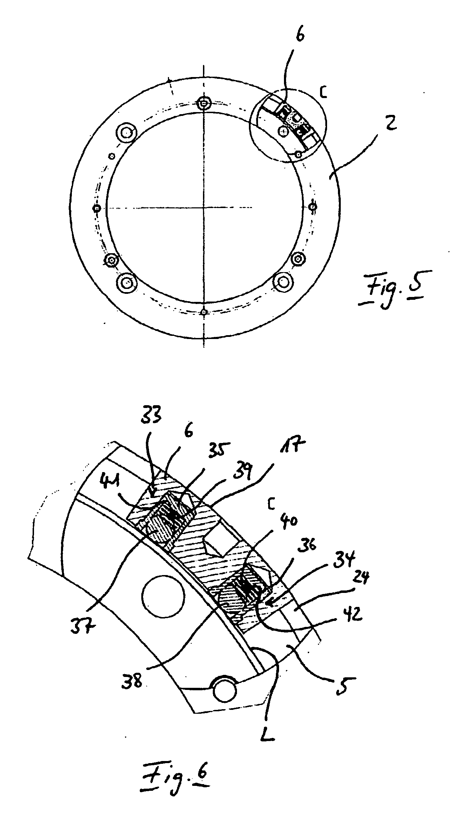

**Fig. 5** zeigt eine weitere Seitenansicht des Trägerelements 2 mit einem teilgeschnittenen Detailbereich C. Der Detailbereich C zeigt ein Wuchtsegment 6 in Schnittdarstellung.

**Fig. 6** zeigt den Detailbereich C in einer vergrößerten Darstellung. Gut zu erkennen ist das Wuchtsegment 6 in Schnittdarstellung. Das Wuchtsegment 6 weist zwei Ausnehmungen 33, 34 auf, wobei in den Ausnehmungen 33, 34 zwei Einsätze 35,36, in der Art einer zylindrischen Hülse ausgebildet, angeordnet sind.

In der zylindrischen Hülse sind wiederum jeweils ein Laufkörper 37,38, hier in der Art einer Kugel ausgebildet, sowie jeweils ein mit der Kugel in Eingriff stehendes flexibles Mittel 39, 40, hier in der Art einer Feder ausgebildet, angeordnet. Die Federn sind zwischen dem Bodenbereich 41, 42 der Einsätze 35, 36 und der Kugel angeordnet. Die Federn bewirken, dass zum einen die Kugeln gegen die Lauffläche L der Aufnahmenut 5 gedrückt werden und zum anderen das Wuchtsegment 6 mit seinen (hier nicht sichtbaren) Keilflächen gegen die (hier nicht sichtbaren) Keilflächen des radial außen liegenden zweiten Aufnahmekanals 24 gedrückt werden. Durch den erzeugten Federdruck kann das Wuchtsegment 6 somit zu Auswuchtvorgängen in der Aufnahmenut 5 positioniert werden.

Durch leichten Druck auf den oberen Steg 17 des Wuchtsegments 6 und einem damit verbundenen Zusammendrücken der Federelemente kann das Wuchtsegment 6 jederzeit "freigegeben" und neu positioniert werden.

Durch Verschieben der Wuchtsegmente 6, 7 in der Aufnahmenut 5 kann somit eine eventuelle Unwucht eines rotierenden Körpers mit einfacher mechanischer Ausgestaltung ohne großen technologischen Aufwand zuverlässig ausgeglichen werden. Beispielsweise kann jedoch in Verbindung mit der Vorrichtung ein geeignetes Messgerät eingesetzt werden, um zu ermitteln, an welche Position die Gewichte verschoben werden müssen, um eine eventuelle Unwucht auszugleichen.

Die Vorrichtung kann nahezu wartungsfrei betrieben werden, wobei die Montage, Demontage und eventuelle Reinigung mit wenigen Handgriffen realisiert werden kann.

## Patentansprüche

1. Vorrichtung (1) zum Auswuchten rotierender Körper mit einem ringförmigen Trägerelement (2) und mit zumindest einem Wuchtsegment (6, 7), wobei das Trägerelement (2) eine Aufnahmenut (5) aufweist, in der das zumindest eine Wuchtsegment (6, 7) relativ zum Trägerelement (2) verschoben werden kann, **dadurch gekennzeichnet, dass** die Aufnahmenut (5) radial umlaufend auf der Umfangsfläche (U) des ringförmigen Trägerelements (2) angeordnet ist, wobei das Wuchtsegment (6, 7) mit zunehmender Drehzahl des Trägerelements (2) mit einer zunehmenden Fliehkraft beaufschlagt wird, wobei die Aufnahmenut (5) und das Wuchtsegment (6, 7) miteinander in Wirkverbindung stehende Keilflächen (27, 28, 29, 30, 31, 32) aufweisen, die derart ausgebildet sind, dass bei zunehmender Fliehkraft die an den Keilflächen (27, 28, 29, 30, 31, 32) erzeugte Keilwirkung zu einer radialen Selbsthemmung des Wuchtsegments (6, 7) in der Aufnahmenut (5) führt.

2. Vorrichtung nach Anspruch 1, **dadurch gekennzeichnet, dass** das Trägerelement (2) aus zwei separaten ringförmigen Trägerscheiben (3, 4) gebildet wird, wobei die Trägerscheiben (3, 4) über Befestigungsmittel, insbesondere Schrauben (8) und/oder Stifte (9), lösbar miteinander verbunden sind.

3. Vorrichtung nach einem der Ansprüche 1 und 2, **dadurch gekennzeichnet, dass** die Aufnahmenut (5) im Wesentlichen T-förmig ausgebildet ist, dergestalt, dass die Aufnahmenut (5) einen radial innenliegenden ersten Aufnahmekanal (23) und einen sich an den ersten Aufnahmekanal (23) anschließenden und dazu zumindest geringfügig kleiner ausgebildeten radial außenliegenden zweiten Aufnahmekanal (24) aufweist, wobei an den Flanken (26, 27) des kleineren zweiten Aufnahmekanals (24) die sich radial nach außen verjüngenden Keilflächen (27, 28) verlaufen.

4. Vorrichtung nach einem der Ansprüche 1 bis 3, **dadurch gekennzeichnet, dass** das Wuchtsegment (6, 7) im Wesentlichen formkomplementär zur Aufnahmenut (5) ausgebildet ist, wobei das Wuchtsegment (6, 7) einen zur Aufnahmenut (5) geringfügig kleineren Querschnitt aufweist, und wobei das Wuchtsegment (6, 7) einen breiteren Bodenabschnitt (14, 15) und einen sich daran anschließenden oberen Steg (18, 19) aufweist, wobei am oberen Steg die Keilflächen (29, 30, 31, 32) verlaufen, die mit den am zweiten Aufnahmekanal (24) der Aufnahmenut (5) vorgesehenen Keilflächen (27, 28) in Wirkverbindung stehen.

5. Vorrichtung nach einem der Ansprüche 1 bis 4, **dadurch gekennzeichnet**, das am Wuchtsegment ein flexibles Mittel (39, 40) zum Erzeugen eines Gegendrucks, beispielsweise eine Feder oder dergleichen, vorgesehen ist, mit dem das Wuchtsegment (6, 7) in der Aufnahmenut (5) fixiert bzw. positioniert werden kann.

6. Vorrichtung nach einem der Ansprüche 1 bis 5, **dadurch gekennzeichnet, dass** am Wuchtsegment (6, 7) Laufkörper (37, 38), beispielsweise in der Art einer Kugel oder eines Lagers, vorgesehen sind, wobei mittels der Laufkörper (37, 38) eine Verstellung des Wuchtsegments (6, 7) in der Aufnahmenut (5) erfolgt.

7. Vorrichtung nach einem der Ansprüche 5 oder 6, **dadurch gekennzeichnet, dass** das flexible Mittel (39, 40) und/oder der Laufkörper (37, 38) in einem Einsatz (35, 36), beispielsweise einer Buchse oder Hülse oder dergleichen, angeordnet sind, wobei der Einsatz (35, 36) in einer entsprechenden Ausnehmung (33, 34) im Wuchtsegment (6, 7) angeordnet ist.

8. Vorrichtung nach einem der Ansprüche 1 bis 7, **dadurch gekennzeichnet, dass** bei mehreren Wuchtsegmenten (6, 7), die Verstellbewegung der einzelnen Wuchtsegmente (6, 7) in der gleichen Ebene erfolgt.

9. Vorrichtung nach einem der Ansprüche 1 bis 8, **dadurch gekennzeichnet, dass** jedes Wuchtsegment (6, 7) stufenlos in jede Position innerhalb von 360° verstellbar ist.

10. Vorrichtung nach einem der Ansprüche 1 bis 9, **dadurch gekennzeichnet, dass** das Trägerelement (2) im Bereich der Aufnahmenut (5) mit einer(m) optisch oder elektronisch ablesbaren(m) Ablese-Skala (22) oder Maßstab versehen ist.

11. Vorrichtung nach einem der Ansprüche 1 bis 10, **dadurch gekennzeichnet, dass** das Wuchtsegment (6, 7) mit einer Ablese-Markierung versehen ist, wobei die Ablese-Markierung mit der(m) am Trägerelement (2) angeordneten Ablese-Skala (22) oder Maßstab zusammenwirkt.

## Claims

1. Device (1) for balancing rotating bodies, comprising an annular carrier element (2) and comprising at least one balancing segment (6, 7), the carrier element (2) comprising a receiving groove (5) in which the at least one balancing segment (6, 7) can be displaced relative to the carrier element (2), **characterised in that** the receiving groove (5) is arranged radially circumferentially on the peripheral face (U) of the annular carrier element (2), the balancing segment (6, 7) being loaded with an increasing centrifugal force as the rotational speed of the carrier element (2) increases, the receiving groove (5) and the balancing segment (6, 7) comprising wedge faces (27, 28, 29, 30, 31, 32), which are operatively interconnected and which are formed in such a way that as the centrifugal force increases, the wedge effect produced on the wedge faces (27, 28, 29, 30, 31, 32) leads to radial self-locking of the balancing segment (6, 7) in the receiving groove (5).

2. Device according to claim 1, **characterised in that** the carrier element (2) is formed from two separate annular carrier discs (3, 4), the carrier discs (3, 4) being releasably interconnected via fastening means, in particular screws (8) and/or pins (9).

3. Device according to either claim 1 or claim 2, **characterised in that** the receiving groove (5) is formed substantially T-shaped, in such a way that the receiving groove (5) comprises a radially inner first receiving duct (23) and a radially outer second receiving duct (24), which is adjacent to and formed at least slightly smaller than the first receiving duct (24), the radially outwardly tapering wedge faces (27, 28) extending on the flanks (26, 27) of the smaller, second receiving duct (24).

4. Device according to any one of claims 1 to 3, **characterised in that** the balancing segment (6, 7) is formed substantially complementary to the receiving groove (5) in shape, the balancing segment (6, 7) having a slightly smaller cross-section than the receiving groove (5), and the balancing segment (6, 7) comprising a wider base portion (14, 15) and an upper web (18, 19) adjacent thereto, the wedge faces (29, 30, 31, 32), which are operatively connected to the wedge faces (27, 28) provided on the second receiving duct (24) of the receiving groove (5), extending on the upper web.

5. Device according to any one of claims 1 to 4, **characterised in that** a flexible means (39, 40) for producing a counter pressure, for example a spring or the like, with which the balancing segment (6, 7) can be fixed or positioned in the receiving groove (5), is provided on the balancing segment.

6. Device according to any one of claims 1 to 5, **characterised in that** movable bodies (37, 38), for example in the manner of a ball or bearing, are provided on the balancing segment (6, 7), the balancing segment (6, 7) being adjusted in the receiving groove (5) by means of the movable bodies (37, 38).

7. Device according to either claim 5 or claim 6, **characterised in that** the flexible means (39, 40) and/or the movable body (37, 38) are arranged in an insert (35, 36), for example a bushing or sleeve or the like, the insert (35, 36) being arranged in a corresponding recess (33, 34) in the balancing segment (6, 7).

8. Device according to any one of claims 1 to 7, **characterised in that** if there are a plurality of balancing segments (6, 7), the adjustment movements of the individual balancing segments (6, 7) take place in the same plane.

9. Device according to any one of claims 1 to 8, **characterised in that** each balancing segment (6, 7) can be adjusted continuously into any position within 360°.

10. Device according to any one of claims 1 to 9, **characterised in that** the carrier element (2) is provided with a read-off graduation (22) or scale, which can be read off optically or electronically, in the region of the receiving groove.

11. Device according to any one of claims 1 to 10, **characterised in that** the balancing segment (6, 7) is provided with a read-off marking, the read-off marking cooperating with the read-off graduation (22) or scale which is arranged on the carrier element (2).

## Revendications

1. Dispositif (1) d'équilibrage de corps tournants avec un élément support (2) annulaire et au moins un segment de force active (6, 7), l'élément support (2) présentant une rainure de logement (5), dans laquelle l'au moins un segment de force active (6, 7) peut être déplacé par rapport à l'élément support (2), **caractérisé par le fait que** la rainure de logement (5) est disposée de manière radialement périphérique sur la surface périphérique (U) de l'élément support (2) annulaire, le segment de force active (6, 7) étant soumis avec une fréquence de rotation croissante de l'élément support (2) à une force centrifuge croissante, la rainure de logement (5) et le segment de force active (6, 7) présentant des surfaces de clavette (27, 28, 29, 30, 31, 32) se trouvant en liaison fonctionnelle entre elles, qui sont formées de telle sorte qu'en cas de force centrifuge croissante l'effet de blocage généré au niveau des surfaces de clavette (27, 28, 29, 30, 31, 32) mène à un auto-blocage radial du segment de force active (6, 7) dans la rainure de logement (5),

2. Dispositif selon la revendication 1, **caractérisé par le fait que** l'élément support (2) est formé de deux plaques support (3, 4) annulaires séparées, les plaques support (3, 4) étant raccordées entre elles de manière amovible par l'intermédiaire de moyens de fixation, en particulier des vis (8) et/ou des broches (9).

3. Dispositif selon l'une des revendications 1 et 2, **caractérisé par le fait que** la rainure de logement (5) présente essentiellement une forme de T de telle façon que la rainure de logement (5) présente un premier canal de réception (23) se trouvant radialement à l'intérieur et un second canal de réception (24) se trouvant radialement à l'extérieur se raccordant au premier canal de réception (23) et de forme au moins légèrement plus petite, les surfaces de clavette (27, 28) s'étendant radialement, en s'effilant vers l'extérieur, sur les flancs (26, 27) du second canal de réception (24) plus petit.

4. Dispositif selon l'une des revendications 1 à 3, **caractérisé par le fait que** le segment de force active (6, 7) présente essentiellement une complémentarité de forme avec la rainure de logement (5), le segment de force active (6, 7) présentant une section légèrement inférieure à la rainure de logement (5), et le segment de force active (6, 7) présentant une section de base (14, 15) plus large et une entretoise (18, 19) supérieure y étant raccordée, les surfaces de clavette (29, 30, 31, 32) s'étendant au niveau de l'entretoise supérieure, qui se trouvent en liaison fonctionnelle avec les surfaces de clavette (27, 28) prévues sur le second canal de réception (24) de la rainure de logement (5).

5. Dispositif selon l'une des revendications 1 à 4, **caractérisé par le fait qu'**un segment de force active (39, 40) est prévu pour générer une contre-pression, par exemple un ressort ou similaire, avec lequel le segment de force active (6, 7) peut être fixé ou positionné dans la rainure de logement (5).

6. Dispositif selon l'une des revendications 1 à 5, **caractérisé par le fait que** des corps de roulement (37, 38), par exemple sous la forme d'une bille ou d'un roulement, sont prévus sur le segment de force active (6, 7), un déplacement du segment de force active (6, 7) se produisant au moyen des corps de roulement (37, 38) dans la rainure de logement (5).

7. Dispositif selon l'une des revendications 5 ou 6, **caractérisé par le fait que** le moyen flexible (39, 40) et/ou le corps de roulement (37, 38) sont disposés dans un insert (35, 36), par exemple dans une douille ou un manchon ou similaire, l'insert (35, 36) étant disposé dans un évidement (33, 34) correspondant dans le segment de force active (6, 7).

8. Dispositif selon l'une des revendications 1 à 7, **caractérisé par le fait que**, en cas de multiples segments de force active (6, 7), le mouvement de déplacement des différents segments de force active (6, 7) se produit dans le même plan.

9. Dispositif selon l'une des revendications 1 à 8, **caractérisé par le fait que** chaque segment de force active (6, 7) est réglable en continu dans chaque position sur 360°.

10. Dispositif selon l'une des revendications 1 à 9, **caractérisé par le fait que** l'élément support (2) est pourvu, dans la zone de la rainure de logement (5), d'une échelle de lecture (22) ou d'une règle graduée lisible visuellement ou électroniquement.

11. Dispositif selon l'une des revendications 1 à 10, **caractérisé par le fait que** le segment de force active (6, 7) est pourvu d'un marqueur de lecture, le marqueur de lecture coopérant avec l'échelle de lecture (22) ou la règle graduée disposée sur l'élément support (2).
